# FASCICULE DE BREVET EUROPEEN

(11) **EP 3 548 830 B1**
(45) Date de publication et mention de la délivrance du brevet: **17.06.2020**
(21) Numéro de dépôt: 18714304.5
(22) Date de dépôt: 13.03.2018
(51) Int. Cl.: F28F 13/00, F28D 15/02, B64G 1/50, F28F 13/16, F28D 21/00, F28F 13/12

(54) **DISPOSITIF DE TRANSFERT THERMIQUE ET ENGIN SPATIAL COMPORTANT UN TEL DISPOSITIF DE TRANSFERT THERMIQUE**
WÄRMETRANSPORTEINRICHTUNG UND RAUMFAHRZEUG MIT EINER SOLCHEN WÄRMETRANSPORTEINRICHTUNG
HEAT TRANSFER APPARATUS AND SPACECRAFT CONTAINING SUCH A HEAT TRANSFER APPARATUS

(30) Priorité: 13.03.2017 FR 1752027; 02.05.2017 FR 1753847
(43) Date de publication de la demande: 09.10.2019
(73) Titulaire: Airbus Defence and Space SAS, 31402 Toulouse Cedex 4 (FR)
(72) Inventeur: WALKER, Andrew, 31400 Toulouse (FR)
(74) Mandataire: Plasseraud IP
(86) Numéro de dépôt international: PCT/FR2018/050595
(87) Numéro de publication internationale: WO 2018/172659

(56) Documents cités:
- DE-A1- 3 017 252
- US-A- 4 515 206
- US-A- 5 188 171
- US-A- 5 222 548
- US-A1- 2002 036 890
- US-A1- 2006 090 882
- US-A1- 2008 236 794
- US-A1- 2017 038 166

## Description

La présente invention se situe dans le domaine des dispositifs de transfert thermique. La présente invention trouve des applications dans de nombreux domaines techniques qui requièrent des transferts de chaleur contrôlés et notamment dans le domaine aérospatial et en particulier pour les satellites en orbite géostationnaires.

En effet, en raison du mouvement de révolution de la terre autour du soleil, les différentes faces d'un satellite géostationnaire ne reçoivent pas la même quantité de rayonnement solaire au cours d'une orbite. En particulier les faces Est et Ouest sont alternativement exposées au soleil est à l'ombre, ce qui produit un environnement thermique variable pour le satellite, tantôt très chaud, tantôt très froid. En conséquences les faces Est et Ouest sont en général isolés thermiquement du satellite. L'évacuation de la chaleur dissipée par les équipements du satellite se fait alors essentiellement par les murs Nord et Sud, ce qui limite la capacité de réjection thermique du satellite à la capacité des radiateurs Nord et Sud. D'autre part, le dimensionnement des radiateurs est fait de sorte que les équipements restent à une température inférieure à celle compatible avec leur bon fonctionnement, dans le cas le plus défavorable, qu'on appelle souvent le« pire cas chaud ». Ce dimensionnement de « pire cas chaud » peut alors entrainer un refroidissement excessif des équipements, notamment quand ils ne sont pas en fonctionnement, à une température inférieure à la température minimale qu'ils peuvent supporter. Cela rend nécessaire la présence de dispositifs de chauffage pour maintenir l'équipement à une température suffisante dans le cas plus défavorable qu'on appelle souvent le « pire cas froid ». En outre, il faut que le générateur solaire du satellite puisse fournir la puissance électrique nécessaire, qui n'est pas forcément disponible, notamment pendant la phase de transfert électrique, où les équipements de la charge utile sont coupés et l'alimentation réservée aux propulseurs électriques assurant le transfert vers l'orbite géostationnaire.

Dans le cas usuel le transport de chaleur vers les radiateurs se fait par des caloducs. Ces caloducs fonctionnent de façon complètement passive et bidirectionnelle de sorte que le problème est particulièrement critique car le caloduc va continuer d'assurer un transfert de chaleur entre les radiateurs et sans avoir la possibilité de l'interrompre. Un dispositif de transfert termique selon le préambule de la revendication 1 est divulgué par le document US 2006/0090882 A1.

Le but de la présente invention est de proposer un système de transfert de chaleur contrôlable, léger et fiable qui permette de résoudre les inconvénients précédents.

A cet effet, l'invention a pour objet un dispositif de transfert de chaleur apte à transférer de la chaleur entre un premier objet et un second objet, comprenant un boîtier ayant une première paroi principale et une seconde paroi principale, la première paroi principale étant destinée à être en contact thermique direct par conduction avec ledit premier objet, la seconde paroi principale étant destinée à être en contact thermique direct par conduction avec ledit second objet, ledit boîtier comportant une cavité interne fermée de manière étanche, un liquide diélectrique contenu dans la cavité interne et un mélangeur propre à mettre ledit liquide diélectrique en mouvement,
le dispositif de transfert thermique étant propre à être commuté entre un premier état dans lequel le liquide diélectrique stagne et un deuxième état dans lequel le liquide diélectrique est en mouvement et transfère par convection forcée de la chaleur entre la première paroi principale et la seconde paroi principale, le mélangeur comportant au moins deux électrodes disposées à intervalle 'une de l'autre et immergées dans le liquide diélectrique, les électrodes et le liquide formant un système électro-hydrodynamique, lorsque le dispositif de transfert thermique est commuté dans le deuxième état, le liquide diélectrique traverse les électrodes au cours d'un mouvement de convection forcée, la conductance thermique entre la première paroi principale et la seconde paroi principale lorsque le dispositif de transfert est dans le premier état étant quatre fois inférieure à la conductance thermique entre la première paroi principale et la seconde paroi principale lorsque le dispositif de transfert est dans le second état.

Avantageusement, le dispositif de transfert thermique peut être un bon échangeur thermique dans un état et un bon isolant thermique dans l'autre état. Quand il est couplé à d'autres moyens de transfert thermique, il peut ainsi fonctionner comme un interrupteur thermique de ce moyen de transfert.

Avantageusement, le dispositif de transfert thermique est bidirectionnel. Il est donc compatible avec d'autres moyens de transfert thermique bidirectionnels tels que les caloducs. Ainsi, le transport de chaleur peut être réalisé soit du caloduc vers la seconde paroi principale du boîtier soit de la seconde paroi principale du boîtier vers le caloduc.

Avantageusement, ce dispositif de transfert de chaleur présente une masse faible et consomme peu d'énergie électrique.

Avantageusement, ce dispositif de transfert de chaleur présente un faible encombrement.

Suivant des modes particuliers de réalisation, le dispositif de transfert thermique comporte une ou plusieurs des caractéristiques suivantes :
- Le dispositif de transfert comporte en outre ledit premier objet et dans lequel le premier objet est un caloduc.
- Le dispositif de transfert comporte en outre ledit second objet et dans lequel le second objet est un caloduc. Selon un mode de réalisation, la première paroi principale est en contact thermique direct avec ledit caloduc. Selon un autre mode de réalisation, au moins un objet parmi le premier objet et le second objet est intégré dans au moins une paroi parmi la première paroi principale et la seconde paroi principale.
- Au moins une paroi parmi la première paroi principale et la seconde paroi principale comporte une face externe plane.
   Avantageusement, cette paroi plane favorise l'échange thermique avec un objet plat.
- Le boîtier présente la forme d'un parallélépipède ayant une longueur, une largeur et une hauteur, la hauteur étant la distance entre la première paroi principale et la seconde paroi principale, et dans lequel la hauteur présente une dimension deux fois inférieure à ladite largeur.
   Avantageusement, cette forme plane limite la puissance nécessaire à l'entrainement du fluide et augmente la surface d'échange à volume constant.
- Les électrodes s'étendent dans un plan parallèle au plan médian des parois principales.
   Avantageusement, ce type de mélangeur est fiable car il ne comporte pas de pièces mécaniques qui pourraient s'user suite à des contacts répétés.
   Le mélangeur comporte un premier support propre à porter au moins deux électrodes et un second support propre à porter au moins deux électrodes, les premier et le second supports étant agencés l'un à côté de l'autre dans un même plan parallèle à une paroi principale, les au moins deux d'électrodes portées par le premier support étant alimentées par une première tension, les au moins deux électrodes portées par le second support étant alimentées par une seconde tension, ladite seconde tension étant de signe opposée à la première tension, la circulation du fluide entre les électrodes du premier support et la circulation du fluide entre les électrodes du deuxième support étant de sens opposées.
   La conductance thermique entre la première paroi principale et la seconde paroi principale dans le premier état est inférieure à 40 W/K/m² et avantageusement inférieure à 8 W/k/m².
   La conductivité thermique entre la première paroi principale et la seconde paroi principale dans le deuxième état est supérieure à 250 W/K/m² et avantageusement supérieure à 800 W/k/m².

L'invention a également pour objet un engin spatial comprenant :
- une caisse ayant une face Nord, une face Sud opposée à la face Nord, une face Est et une face Ouest opposée à la face Est ;
- au moins un radiateur porté par au moins une face parmi la face Nord la face Sud, la face Est ou la face Ouest,
- au moins un équipement dissipatif relié par un dispositif de transfert thermique nominal à au moins un radiateur ;
caractérisé en ce que le dispositif de transfert thermique nominal comporte au moins un dispositif de transfert thermique selon les caractéristiques mentionnées ci-dessus, de sorte à permettre une conductance thermique commutable entre l'équipement dissipatif et le radiateur selon l'état du dispositif.de transfert thermique.

En variante, l'engin spatial comporte au moins un dispositif de transfert thermique redondant, un caloduc nominal et un caloduc redondant, et dans lequel une paroi principale du dispositif de transfert principal et une paroi principale du dispositif de transfert redondant est en contact thermique avec ledit caloduc nominal et ledit caloduc redondant.

L'invention sera mieux comprise à la lecture de la description qui va suivre, donnée uniquement à titre d'exemple et faite en se référant aux figures sur lesquelles :
- la figure 1 est une vue schématique en coupe d'un dispositif de transfert thermique selon un premier mode de réalisation de l'invention, d'un premier et un second objets, le dispositif de transfert thermique étant dans un premier état ;
- la figure 2 est une vue schématique en coupe du dispositif de transfert thermique, du premier et du second objets tels qu'illustrés sur la figure 1, le dispositif de transfert thermique étant dans un deuxième état ;
- la figure 3 est une vue schématique en coupe d'un dispositif de transfert thermique selon un deuxième mode de réalisation de l'invention ;
- la figure 4 est une vue schématique en coupe d'un dispositif de transfert thermique selon un troisième mode de réalisation de l'invention ;
- la figure 5 est une vue schématique en coupe d'un dispositif de transfert thermique selon un quatrième mode de réalisation de l'invention ;
- la figure 6 est une vue schématique en perspective d'un engin spatial selon la présente invention ; et
- la figure 7 est une vue schématique en perspective d'une partie d'un engin spatial comportant deux dispositifs de transfert thermique montés en redondance.

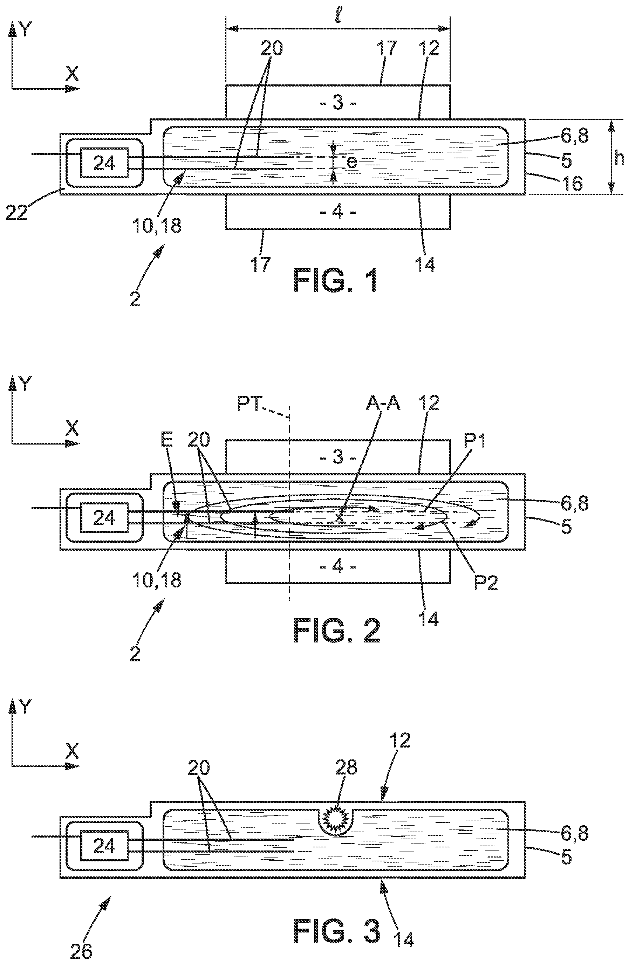

En référence à la figure 1, le dispositif de de transfert thermique 2 selon l'invention est propre à transférer ou à ne pas transférer de la chaleur par convection forcée entre un premier objet 3 et un second objet 4. Il agit comme un interrupteur thermique.

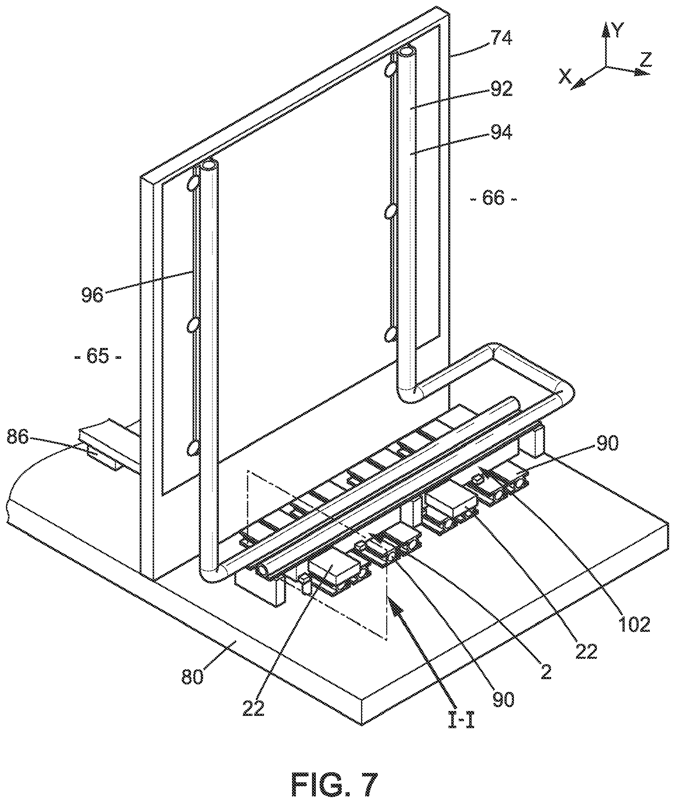

Le dispositif de de transfert thermique 2 peut par exemple être monté dans un engin spatial ou dans tout autre dispositif nécessitant un contrôle d'un flux de chaleur. Le premier 3 et le second 4 objets sont alors par exemple constitués par des caloducs, des composants électroniques, des plaques de support de ces composants électroniques, des équipements. Ainsi, la figure 1 peut par exemple représenter une vue en coupe selon le plan I-I d'un dispositif thermique et de deux caloducs d'une partie d'un engin spatial tel qu'illustré sur la figure 7.

Selon le **premier mode de réalisation** de l'invention illustré sur la figure 1, le dispositif de transfert thermique 2 comporte un boitier 5 creux délimitant une cavité interne 6, un liquide 8 contenu dans la cavité interne 6 et un mélangeur 10 propre à mettre en mouvement le liquide et à provoquer une augmentation de la conduction thermique entre deux parties du boîtier 5.

Le boitier 5 est fermé de manière étanche.

Dans le mode de réalisation de la figure 1, le boîtier 5 présente une forme générale parallélépipédique rectangle muni d'un appendice creux. Il présente une première paroi principale 12, une seconde paroi principale 14 opposée à la première paroi principale et quatre parois latérales 16. Le boîtier 5 présente une longueur L, une largeur l et une hauteur h, la hauteur h étant définie comme la distance entre la première paroi principale 12 et la seconde paroi principale 14.

De préférence, le boîtier 5 est plat. Ainsi, le boîtier 5 présente une hauteur de dimension deux fois inférieure à sa largeur I. Sa première 12 et sa seconde 14 parois principales sont en contact thermique avec le premier 3 et le second 4 objets.

Dans ce mode de réalisation, avantageusement, la première 12 et la seconde 14 parois principales comportent une face externe plane 17. Cette planéité favorise l'échange thermique avec le premier et le second objets.

Selon la présente invention, le boîtier présente une largeur comprise entre 50 mm et 90 mm.

De préférence, le boîtier présente une largeur d'environ 60 mm. Cette largeur permet de disposer deux caloducs de type classique côte à côte, la largeur des caloducs étant disposée dans le sens de la largeur du boîtier. En effet, un caloduc de type classique présente une largeur d'environ 30 mm et une longueur définie en fonction des besoins du constructeur. Ainsi, par exemple dans l'engin spatial illustré sur la figure7, deux boitiers sont disposés dans le prolongement l'un de l'autre avec leur axe longitudinal disposé selon la direction X et deux caloducs de type classique sont agencés sur le boîtier côte à côte avec leur axe longitudinal parallèle à l'axe longitudinal du boîtier, c'est-à-dire selon la direction X. Avantageusement, une largeur d'environ 60 mm permet de disposer deux caloducs en parallèle pour réaliser une fonction de redondance. Cette redondance d'assurer le transport de chaleur même lorsqu'un des deux caloducs a été percé par un météorite.

En variante, le boitier présente une largeur supérieure à 90 mm. Cette variante est utilisée lorsqu'un grand nombre de caloducs sont disposés côte à côte avec leur axe longitudinal dans le sens de la longueur du boîtier.

Le boîtier présente une longueur comprise entre 100 mm à 500 mm.

De préférence, le boîtier présente une longueur d'environ 200 mm. Une telle longueur permet avantageusement un échange un transport de chaleur suffisant. Ainsi, par exemple dans le mode de réalisation illustré sur la figure 7, le boitier présente une longueur de 200 mm et quatre caloducs sont aménagés sous le boîtier avec leur axe longitudinal perpendiculaire à l'axe longitudinal du boitier. Autrement dit, l'axe longitudinal des caloducs disposé sous le boitier s'étend selon la direction Z. Un évaporateur de boucle fluide présente une longueur d'environ 400 mm de sorte qu'un transfert thermique efficace est réalisé lorsque deux boitiers d'une longueur de 200 mm sont disposés dans le prolongement l'un de l'autre selon leur axe longitudinal, comme illustré sur la figure 7.

De préférence, le boîtier présente une longueur d'environ 400 mm. Avantageusement cette longueur correspond à la longueur d'un évaporateur.

Le boîtier présente une hauteur comprise entre 20 mm et 40 mm. Cette hauteur est a été définie comme un compromis entre l'exigence de minimisation de la taille du boîtier en raison des contraintes d'encombrement dans un satellite, et l'exigence d'une hauteur suffisante pour obtenir de bonnes performances de l'état de transfert thermique et de l'état de non transfert thermique de l'interrupteur.

De préférence, le boitier présente une hauteur d'environ 25 mm.

Rien n'exclut cependant l'utilisation de hauteurs plus faibles ou plus importantes en fonction de besoins spécifiques.

La longueur, la largeur et la hauteur du boîtier sont choisis indépendamment les uns des autres.

Avantageusement, les dimensions du boîtier sont de 200 mm de longueur, 60 mm de largeur et de 25 mm de hauteur.

Dans le mode de réalisation représenté sur la figure 1, le mélangeur 10 forme avec le liquide un système électro-hydrodynamique 18. Ce système électro-hydrodynamique 18 comporte deux électrodes 20 espacées l'une de l'autre par un intervalle e. L'intervalle e est compris entre 10 microns et 1 000 microns. De préférence, l'intervalle e est égal à 100 microns. Les électrodes 20 sont immergées dans le liquide. Les électrodes 20 sont formées chacune par une grille. Une grille formant électrode s'étend dans un premier plan P1. L'autre grille formant électrode s'étend dans un deuxième plan P2.

Le liquide est un liquide diélectrique. Ce liquide diélectrique n'est pas un matériau à cristaux liquides. Le liquide est propre à transférer de la chaleur. Un dispositif EHD tel que décrit dans la demande de brevet WO 2015/084238, pourrait être utilisé.

Dans le mode de réalisation représenté, le mélangeur 10 comporte une unité électronique de traitement 24 logé dans l'appendice 22. L'unité électronique de traitement 24 est propre à recevoir un signal de commande et à appliquer ou à ne pas appliquer une tension entre les deux électrodes 20 en fonction de ce signal de commande.

En fonctionnement, le dispositif de transfert de chaleur 2 est un interrupteur thermique propre à être commuté entre un état de conduction thermique faible dit premier état, et un état de conduction thermique élevé dit deuxième état.

Dans le premier état illustré sur la figure 1, aucune tension n'est appliquée entre les deux électrodes 20. Le liquide est immobile. Le liquide stagne. Le dispositif de transfert de chaleur agit comme un isolant. La chaleur du premier objet n'est pas (ou peu) transférée au second objet, même si les deux objets possèdent une température très différente.

Dans le second état illustré sur la figure 2, une tension est appliquée entre les deux électrodes 20. Le liquide est entrainé en mouvement. Si la première paroi principale présente une température supérieure à la seconde paroi principale, de la chaleur est transférée de la première paroi principale 12 par convection vers la seconde paroi principale 14. Si la seconde paroi principale présente une température supérieure à la première paroi principale, de la chaleur est transférée de la seconde paroi principale 12 par convection forcée à la première paroi principale 14.

Pour faciliter la compréhension de l'invention, un plan transversal PT un premier plan P1 et un deuxième plan P2 sont représentés sur la figure 2. Le plan transversal PT est sensiblement perpendiculaire aux première et deuxième plan P1, P2 et passent par l'extrémité libre des électrodes 201, 202. Un espace appelé espace inter-électrodes E est délimité entre le premier plan P1, le deuxième plan P2 et le plan transversal PT.

Lorsque le dispositif de transfert thermique 2 est commuté dans le premier état, le liquide diélectrique est entrainé dans un mouvement de convection forcée. Ce mouvement de convection forcée est un mouvement de rotation autour d'un axe A-A. L'axe A-A est situé en dehors de l'espace inter-électrodes E. Lors de sa rotation, le liquide diélectrique traverse les premiers P1 et deuxième plans P2 des électrodes.

Avantageusement, ce système est ainsi bidirectionnel et peut être combiné avec des caloducs ou tout autre dispositif de transfert de chaleur bidirectionnel, la combinaison restant bidirectionnelle.

Avantageusement, selon la présente invention, la conductance thermique entre la première paroi principale 12 et la seconde paroi principale 14, lorsque le dispositif de transfert thermique est dans le premier état est quatre fois inférieure à la conductance thermique entre la première paroi principale 12 et la seconde paroi principale 14, lorsque le dispositif de transfert thermique est dans le second état.

De préférence, la conductance thermique entre la première paroi principale 12 et la seconde paroi principale 14 dans le premier état est inférieure à 40 W/K/m² et avantageusement inférieure à 8 W/k/m².

La conductivité thermique entre la première paroi principale 12 et la seconde paroi principale 14 dans le deuxième état est supérieure à 250 W/K/m² et avantageusement supérieure à 800 W/k/m².

Un dispositif de transfert de chaleur 26 selon un **deuxième mode de réalisation** de l'invention est illustré sur la figure 3. Ce dispositif de transfert de chaleur 26 est similaire au dispositif de transfert de chaleur 2 selon le premier mode de réalisation de l'invention à l'exception du fait qu'un caloduc 28 est intégré dans la première paroi principale 12. Les éléments techniques du dispositif de transfert de chaleur 26 selon le second mode de réalisation identiques aux éléments techniques du dispositif de transfert de chaleur 2 selon le premier mode de réalisation sont référencés par les mêmes références et ne seront pas décrits une seconde fois.

Un caloduc est un dispositif de transfert de chaleur biphasique (utilisant la chaleur latente de transformation de phase pour absorber ou recevoir de la chaleur) dans lequel la phase liquide et vapeur coexistent dans une enceinte avec une structure capillaire s'étendant le long de cette enceinte de sorte que la phase liquide et la phase gazeuse sont à contre-courant la phase liquide se déplaçant dans la structure capillaire (Source norme ECSS-E-ST-31-02C du 12/12/2012, §3.2.7 § 2.20 et §4.1).

L'intégration du caloduc 28 dans la première paroi principale favorise la transmission de la chaleur du liquide calorifère contenu dans le caloduc au liquide contenu dans la cavité interne 6.

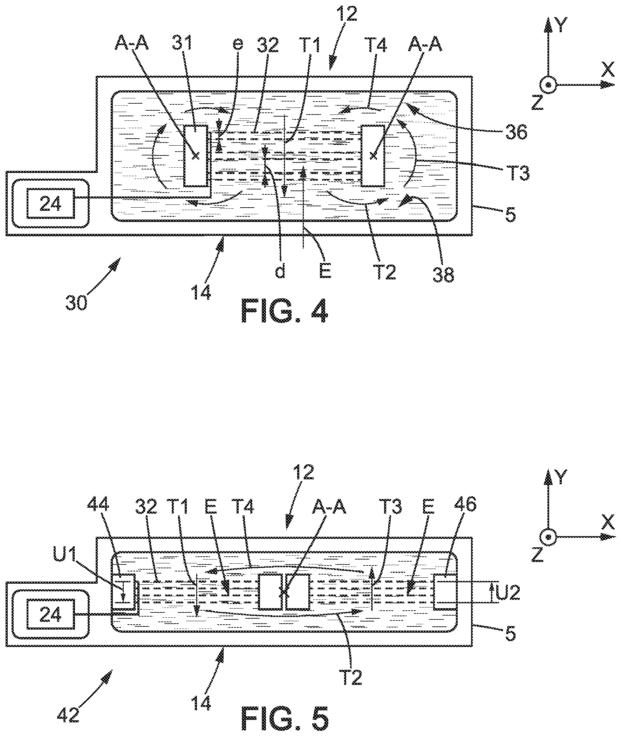

Un dispositif de transfert de chaleur 30 selon un **troisième mode de réalisation** de l'invention est illustré sur la figure 4. Le dispositif de transfert de chaleur 30 selon le troisième mode de réalisation de l'invention ne sera pas décrit en totalité, seules les différences par rapport au dispositif de transfert thermique selon le premier mode de réalisation seront décrites. Les éléments techniques du dispositif de transfert de chaleur 30 selon le troisième mode de réalisation identiques aux éléments techniques du dispositif de transfert de chaleur 2 selon le premier mode de réalisation sont référencés par les mêmes références et ne seront pas décrits une seconde fois.

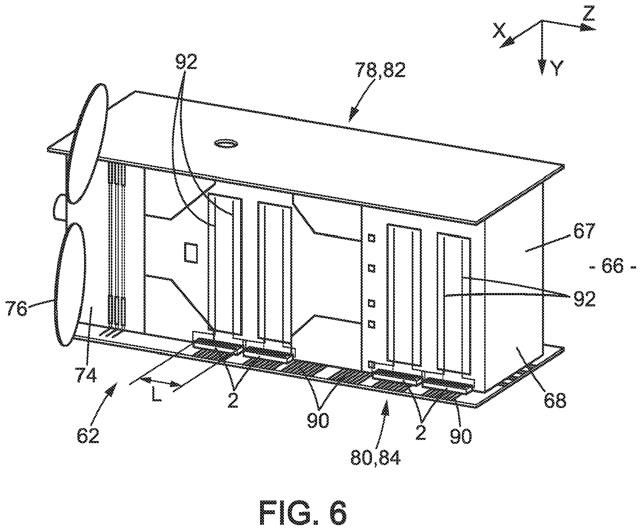

Dans ce mode de réalisation, les deux électrodes 20 sont remplacées par plusieurs paires d'électrodes 32 identiques. Chaque électrode ayant la forme d'une grille 32. Le mélangeur 10 comporte en outre un support propre à porter les électrodes 32 de manière à ce que celles-ci soient superposées les unes aux autres selon la direction Y. Les électrodes 32 s'étendent dans un plan (X, Z) parallèle au plan médian des parois principales 12, 14. Les électrodes sont en outre espacées les unes des autres par un intervalle e. Les paires d'électrodes sont espacées les unes des autres par espace libre d. La longueur de l'espace libre d est généralement différente de la longueur de l'intervalle e. Chaque paire d'électrodes est alimentée en parallèle par l'unité électronique de traitement 24. Un dispositif tel que décrit à la figure 6 de la demande de brevet WO 2015/084238 pourrait être utilisé.

De préférence, les électrodes 32 s'étendent sur une surface inférieure à la surface intérieure de la première paroi principale 12. Ainsi, une portion de la cavité 6 n'est pas parcourue par les électrodes et est destinée au retour de fluide. Un tel agencement entraine un déplacement du fluide selon une boucle tangente à la première 12 et à la seconde 14 parois principales. Un compromis est à trouver entre la surface des électrodes en forme de grille plate qui doit être maximisée pour l'entrainement du fluide et l'espace restant qui doit être suffisant pour assurer le retour du fluide en limitant les pertes de charge.

L'unité électronique de traitement 24 est propre à appliquer une tension à chaque électrode de manière à générer une différence de potentiel entre chaque paire d'électrodes adjacentes. Les différences de potentiel entre chaque paire d'électrodes adjacentes du support 34 sont toutes de même signe. Une différence de potentielle égale à la somme des différences de potentiel entre chaque paire d'électrodes adjacentes est générée entre l'électrode supérieure et l'électrode inférieure.

En fonctionnement, lorsque le dispositif de transfert thermique 30 est dans le second état, le liquide est propre à se déplacer selon des boucles présentant une première portion de trajet T1 dirigée selon une direction Y perpendiculaire aux électrodes, une deuxième portion de trajet T2 courbe selon une direction appartenant au plan de la seconde paroi principale, une troisième portion de trajet T3 selon une direction opposée à la direction Y et une quatrième portion de trajet T4 selon une direction appartenant au plan de la première paroi principale. Dans ce mode de réalisation, le liquide diélectrique est entrainé dans un mouvement de convection forcée. Ce mouvement de convection forcée est un mouvement de rotation autour de deux axes A-A situés en dehors de l'espace inter-électrodes E. Lors de sa rotation, le liquide diélectrique traverse les plans contenant les grilles formant électrodes.

Un dispositif de transfert de chaleur 42 selon un **quatrième mode de réalisation** de l'invention est illustré sur la figure 5. Le dispositif de transfert de chaleur 42 selon le quatrième mode de réalisation de l'invention ne sera pas décrit en totalité seules les différences par rapport au dispositif de transfert thermique selon le troisième mode de réalisation seront décrites. Les éléments techniques du dispositif de transfert de chaleur 42 selon le quatrième mode de réalisation identiques aux éléments techniques du dispositif de transfert de chaleur 30 selon le troisième mode de réalisation sont référencés par les mêmes références et ne seront pas décrits une seconde fois.

Le dispositif de transfert de chaleur 42 selon le quatrième mode de réalisation de l'invention comporte un premier support 44 portant des électrodes 32 et un second support 46 supportant des électrodes 32. Le second support 32 est disposé adjacent au premier support 44.Dans ce mode de réalisation, les supports 44, 46 et électrodes 32 occupent l'ensemble de la surface interne du boîtier 5.

Le premier 44 et le deuxième 46 supports sont identiques au support du dispositif de transfert thermique selon le troisième mode de réalisation à l'exception du fait qu'il comporte un nombre inférieur d'électrodes sur l'exemple illustré sur la figure 5.

L'unité électronique de traitement 24 est propre à appliquer une première tension U1 entre l'électrode supérieure et l'électrode inférieure du premier support 44 et une seconde tension U2 entre l'électrode supérieure et l'électrode inférieure du second support 46. La première tension U1 est de signe opposé à la seconde tension U2.

En fonctionnement, dans le second état, le liquide 8 se déplace selon une première de portion de trajet T1 qui s'étend selon la direction Y au travers des électrodes du premier support 44, une deuxième portion de trajet T2 selon une direction parallèle au plan des électrodes, une troisième portion de trajet T3 qui s'étend selon la direction Y au travers des électrodes du deuxième support 46 et une quatrième portion de trajet T4 selon une direction parallèle au plan des électrodes.

Dans ce mode de réalisation, le liquide diélectrique est entrainé dans un mouvement de convection forcée. Ce mouvement de convection forcée est un mouvement de rotation autour d'un axe A-A situé en dehors de l'espace inter-électrodes E. Lors de sa rotation, le liquide diélectrique traverse les plans contenant les grilles formant électrodes.

Le dispositif de transfert thermique selon la présente invention peut par exemple être monté sur un engin spatial 62 comme illustrés sur les figures 6 et 7.

En référence à la figure 6, un engin spatial 62 du type satellite géostationnaire se présente sous la forme d'une caisse parallélépipédique délimitant un espace intérieur 65 et un espace extérieur 66. Cette caisse présente toujours la même face dirigée vers la Terre, cette face étant appelée la face Terre 68. La face opposée et parallèle à la face Terre 68 est quant à elle appelée la face anti- Terre. Elle n'est pas représentée sur la figure 6.

La face - X, aussi appelée face Est (non représentée), et la face +X, aussi appelée face Ouest 74, sont des faces opposées, parallèles entre elles et perpendiculaires à la direction de déplacement de l'engin spatial. Des antennes de communication 76 sont généralement fixées sur les faces - X et +X.

La face - Y, aussi appelée face Nord 78, et la face + Y, aussi appelée face Sud 80, sont deux autres faces de la caisse. Elles sont opposées, parallèles entre elles et perpendiculaires à l'axe Nord-Sud de la Terre.

Un premier radiateur principal 82, généralement appelé radiateur Nord, est fixé à et s'étend sur la face -Y 78. Un second radiateur principal 84, généralement appelé radiateur Sud, est fixé à et s'étend sur la face +Y 80.

Cette caisse porte des équipements dissipatifs de chaleur, des réseaux 90 de caloducs propres à transférer de la chaleur générée par les équipements dissipatifs vers les radiateurs 82, 84, des réseaux 92 de caloducs propres à transférer de la chaleur sur la face -X et des dispositifs de transfert thermique 2, 102 montés entre les réseaux 90, 92 de caloducs pour autoriser ou interdire le transfert de chaleur d'un réseau de caloducs à l'autre. Les équipements dissipatifs de chaleur sont en général situés à l'intérieur de la caisse. Ils ne sont pas représentés sur la figure 6.

Les équipements dissipatifs 86 sont illustrés schématiquement sur la figure 7. Ils comprennent de façon classique des équipements de radiofréquences actifs ou passifs, des composants électroniques, des instruments de mesure, des unités de calcul et des batteries.

Un troisième réseau de caloducs (non représenté) peut également être monté sur la face interne du radiateur 82 et des dispositifs de transfert thermique 2 peuvent être montés entre le troisième réseau de caloducs et le réseau de caloducs 92.

La figure 7 illustre un exemple d'utilisation de deux dispositifs de transfert thermique 2, 102 selon la présente invention montés en redondance entre un premier réseau de caloducs 90 monté sur la face 80 et un second réseau de caloduc 92 monté sur la face 74.

Un dispositif de transfert thermique est dit dispositif de transfert thermique nominal 2. L'autre dispositif de transfert thermique est dit dispositif de transfert thermique redondant 102.

Le premier réseau 92 comporte un caloduc dit caloduc nominal 94 et un caloduc, dit caloduc redondant 96.

Dans cet exemple, le caloduc nominal 94 et le caloduc redondant 96 sont en contact thermique direct avec la première paroi principale du dispositif de transfert thermique nominal 2 et avec la première paroi principale 12 du dispositif de transfert thermique redondant 102. La seconde paroi principale 14 du dispositif de transfert thermique nominal 2 et la seconde paroi principale 14 du dispositif de transfert thermique redondant 102 sont en contact thermique direct avec les caloducs du second réseau de caloducs 90.

Cette mise en oeuvre de la présente invention assure une double redondance puisque à la fois en en cas de percement d'un caloduc par une météorite ou en cas de percement d'un dispositif de transfert thermique par une météorite, la transmission de chaleur est assurée par l'autre caloduc ou l'autre dispositif de transfert thermique.

L'invention est avantageusement utilisée pour supprimer ou fortement réduire les transferts thermiques entre les équipements dissipatifs 86 et le radiateur, notamment quand le radiateur ne peut plus assurer le refroidissement (par exemple quand le radiateur monté sur la face X est au soleil). Ces transferts thermiques peuvent être avantageusement contrôlés en fonction du fait que l'équipement dissipatif 86 dissipe ou non de la chaleur. Ainsi, dans la phase de transfert en orbite avec un mode de propulsion électrique, les équipements dissipatifs de la charge utile ne fonctionnent pas. La commutation du dispositif thermique selon l'invention dans un état de conduction thermique faible permet avantageusement de ne plus refroidir l'espace interne du satellite par les radiateurs. Au contraire, lorsque le satellite est mis en orbite, le dispositif selon l'invention est commuté dans un état de conduction thermique élevé pour autoriser le transfert thermique de chaleur des équipements dissipatifs vers les radiateurs.

Comme le dispositif de transfert thermique peut être commuté en moins de 10 secondes, il peut être utilisé pour contrôler de manière fine la quantité de chaleur transférée vers le radiateur. A cet effet, le dispositif de transfert thermique comporte une unité de commande propre à transmettre un signal modulé aux électrodes 20, 32. Par exemple, un signal modulé en largeur d'impulsion de type tout ou rien peut être transmis.

Ainsi, le dispositif thermique équipé d'une unité de commande permet un contrôle plus précis et en temps réel de la température de l'équipement dissipatif. Ainsi, la modulation du signal de commande de commutation peut être générée en fonction des variations de dissipation des équipements dissipatifs ou de l'efficacité de réjection thermique des radiateurs. Ainsi, un tel dispositif thermique permet de spécifier des plages de températures de fonctionnement réduites pour certains équipements dissipatifs, ce qui permet d'augmenter les performances des équipements dissipatifs ou de simplifier leur conception.

Cette modulation serait particulièrement bien adaptée aux filtres des charges utiles de télécoms, notamment aux multiplexeurs de sortie (en anglais « Output-multiplexer » ou « OMUX») ou à des équipements particulièrement sensibles tels que les sources laser utilisés notamment pour les Lidars sur des satellites d'observation de la terre.

## Revendications

1. Dispositif de transfert thermique (2, 26, 30, 42) d'un engin spatial apte à transférer de la chaleur entre un premier objet (3) et un second objet (4), comprenant un boîtier (5) ayant une première paroi principale (12) et une seconde paroi principale (14), la première paroi principale (12) étant destinée à être en contact thermique direct par conduction avec ledit premier objet (3), la seconde paroi principale (14) étant destinée à être en contact thermique direct par conduction avec ledit second objet (4), ledit boîtier (5) comportant une cavité interne (6) fermée de manière étanche, un liquide diélectrique (8) contenu dans la cavité interne (6) et un mélangeur (10) propre à mettre ledit liquide diélectrique en mouvement, le dispositif de transfert thermique (2, 26, 30, 42) transférant par convection forcée de la chaleur entre la première paroi principale (12) et la seconde paroi principale (14),
charactérisé en ce que le dispositif de transfert thermique (2, 26, 30, 42) est propre à être commute entre un premier état dans lequel le liquide diélectrique (8) stagne et un deuxième état dans lequel le liquide diélectrique est en mouvement et en ce que le mélangeur (10) comporte au moins deux électrodes (20, 32) disposées à intervalle (i) l'une de l'autre et immergées dans le liquide diélectrique, les électrodes (20, 32) et le liquide (8) formant un système électro-hydrodynamique (18), lorsque le dispositif de transfert thermique (2, 26, 30,42) est commuté dans le deuxième état, le liquide diélectrique traverse les électrodes au cours d'un mouvement de convection forcée, la conductance thermique entre la première paroi principale et la seconde paroi principale lorsque le dispositif de transfert est dans le premier état étant quatre fois inférieure à la conductance thermique entre la première paroi principale et la seconde paroi principale lorsque le dispositif de transfert est dans le second état.

2. Dispositif de transfert thermique (2, 26, 30, 42) selon la revendication 1, qui comporte en outre ledit premier objet (3) et dans lequel le premier objet est un caloduc (28).

3. Dispositif de transfert thermique (2, 26, 30, 42) selon l'une quelconque des revendications 1 et 2, qui comporte en outre ledit second objet (4) et dans lequel le second objet est un caloduc (28).

4. Dispositif de transfert thermique (2, 26, 30, 42) selon l'une quelconques des revendications 1 à 3, dans lequel au moins une paroi parmi la première paroi principale (12) et la seconde paroi principale (14), comporte une face externe plane (17).

5. Dispositif de transfert thermique (2, 26, 30, 42) selon l'une quelconques des revendications 1 à 4, dans lequel le boîtier présente la forme d'un parallélépipède ayant une longueur (L), une largeur (I) et une hauteur (h), la hauteur (h) étant la distance entre la première paroi principale (12) et la seconde paroi principale (14), et dans lequel la hauteur (h) présente une dimension deux fois inférieure à ladite largeur (I).

6. Dispositif de transfert thermique (2, 26, 30, 42) selon la revendication 1, dans lequel lesdites électrodes (20, 32) s'étendent dans un plan parallèle au plan médian des parois principales (12, 14).

7. Dispositif de transfert thermique (2, 26, 30, 42) selon l'une quelconque des revendications 1 et 6, dans lequel le mélangeur (10) comporte un premier support (36) propre à porter au moins deux électrodes (20, 32) et un second support (38) propre à porter au moins deux électrodes (20, 32), les premier (36) et le second (38) supports étant agencés l'un à côté de l'autre dans un même plan parallèle à une paroi principale (12, 14), les au moins deux d'électrodes (20, 32) portées par le premier support (36) étant alimentées par une première tension (U1), les au moins deux électrodes portées par le second support (38) étant alimentées par une seconde tension (U2), ladite seconde tension (U2) étant de signe opposée à la première tension (U1), la circulation du fluide entre les électrodes (20, 32) du premier support (36) et la circulation du fluide entre les électrodes (20, 32) du deuxième support (38) étant de sens opposées.

8. Dispositif de transfert thermique (2, 26, 30, 42) selon l'une quelconque des revendications 1 à 7, dans lequel la conductance thermique entre la première paroi principale (12) et la seconde paroi principale (14) dans le premier état est inférieure à 40 W/K/m² et avantageusement inférieure à 8 W/k/m²

9. Dispositif de transfert thermique (2, 26, 30, 42) selon l'une quelconque des revendications 1 à 8, dans lequel la conductivité thermique entre la première paroi principale (12) et la seconde paroi principale (14) dans le deuxième état est supérieure à 250 W/K/m² et avantageusement supérieure à 800 W/k/m².

10. Engin spatial (62) comprenant :
- une caisse ayant une face Nord (78), une face Sud (80) opposée à la face Nord, une face Est (72) et une face Ouest (74) opposée à la face Est ;
- au moins un radiateur (82, 84) porté par au moins une face parmi la face Nord (78) la face Sud (80), la face Est (72) ou la face Ouest (74),
- au moins un équipement dissipatif 86) relié par un dispositif de transfert thermique nominal (2) à au moins un radiateur (82,84) ;
**caractérisé en ce que** le dispositif de transfert thermique nominal (2) comporte au moins un dispositif de transfert thermique (2, 26, 30, 42) selon l'une quelconque des revendications 1 à 9, de sorte à permettre une conductance thermique commutable entre l'équipement dissipatif (86) et le radiateur (82, 84) selon l'état du dispositif.de transfert thermique (2, 26, 30, 42).

11. Engin spatial (62) selon la revendication 10, qui comporte au moins un dispositif de transfert thermique redondant (102), un caloduc nominal (94) et un caloduc redondant (96), et dans lequel une paroi principale (12, 14) du dispositif de transfert principal (2) et une paroi principale (12, 14) du dispositif de transfert redondant (102) est en contact thermique avec ledit caloduc nominal (94) et ledit caloduc redondant (96).

## Patentansprüche

1. Wärmetransfereinrichtung (2, 26, 30, 42) für ein Raumfahrzeug, die geeignet ist, Wärme zwischen einem ersten Objekt (3) und einem zweiten Objekt (4) zu übertragen, aufweisend ein Gehäuse (5) mit einer ersten Hauptwand (12) und einer zweiten Hauptwand (14), wobei die erste Hauptwand (12) dazu dient, in unmittelbarem thermischen Kontakt mittels Leitung mit dem ersten Objekt (3) zu sein, wobei die zweite Hauptwand (14) dazu dient, in unmittelbarem thermischen Kontakt mittels Leitung mit dem zweiten Objekt (4) zu sein, wobei das Gehäuse (5) eine Innenkavität (6) aufweist, die dicht abgeschlossen ist, eine dielektrische Flüssigkeit (8), die in der Innenkavität (6) enthalten ist, und einen Mischer (10), der eingerichtet ist, die dielektrische Flüssigkeit in Bewegung zu versetzen, wobei die Wärmetransfereinrichtung (2, 26,30, 42) durch erzwungene Konvektion Wärme zwischen der ersten Hauptwand (12) und der zweiten Hauptwand (14) überträgt,
**dadurch gekennzeichnet, dass**
die Wärmetransfereinrichtung (2, 26) eingerichtet ist, zwischen einem ersten Zustand, in dem sich die dielektrische Flüssigkeit (8) nicht in Bewegung befindet, und einem zweiten Zustand, in dem sich die dielektrische Flüssigkeit in Bewegung befindet, umzuschalten, und dass der Mischer (10) zumindest zwei Elektroden (20, 32) aufweist, die voneinander beabstandet (i) und in die dielektrische Flüssigkeit eingetaucht sind, wobei die Elektroden (20, 32) und die Flüssigkeit (8) ein elektrohydrodynamisches System (18) bilden, die dielektrische Flüssigkeit die Elektroden im Zuge einer Bewegung der erzwungenen Konvektion durchströmt, wenn die Wärmetransfereinrichtung (2, 26, 30, 42) in den zweiten Zustand geschaltet ist, wobei die Wärmeleitung zwischen der ersten Hauptwand und der zweiten Hauptwand, wenn die Transfereinrichtung im ersten Zustand ist, vier Mal niedriger ist als die Wärmeleitung zwischen der ersten Hauptwand und der zweiten Hauptwand, wenn die Wärmetransfereinrichtung in dem zweiten Zustand ist.

2. Wärmetransfereinrichtung (2, 26, 30, 42) nach Anspruch 1, welche ferner das erste Objekt (3) aufweist, und wobei das erste Objekt ein Wärmeleitrohr (28) ist.

3. Wärmetransfereinrichtung (2, 26, 30, 42) nach einem der Ansprüche 1 und 2, welche ferner das zweite Objekt (4) aufweist, und wobei das zweite Objekt ein Wärmeleitrohr (28) ist.

4. Wärmetransfereinrichtung (2, 26, 30, 42) nach einem der Ansprüche 1 bis 3, wobei zumindest eine Wand unter der ersten Hauptwand (12) und der zweiten Hauptwand (14) eine ebene Außenfläche (17) aufweist.

5. Wärmetransfereinrichtung (2, 26, 30, 42) nach einem der Ansprüche 1 bis 4, wobei das Gehäuse die Form eines Quaders mit einer Länge (L), einer Breite (I) und einer Höhe (h) aufweist, wobei die Höhe (h) die Strecke zwischen der ersten Hauptwand (12) und der zweiten Hauptwand (14) ist, und wobei die Höhe (h) eine Abmessung hat, die zwei Mal niedriger ist als die Breite (I).

6. Wärmetransfereinrichtung (2, 26, 30, 42) nach Anspruch 1, wobei sich die Elektroden (20, 32) in einer zur mittleren Ebene der Hauptwandungen (12, 14) parallelen Ebene erstrecken.

7. Wärmetransfereinrichtung (2, 26, 30, 42) nach einem der Ansprüche 1 und 6, wobei der Mischer (10) eine erste Halterung (36), die zum Tragen von mindestens zwei Elektroden (20, 32) ausgelegt ist, und eine zweite Halterung (38), die zum Tragen von mindestens zwei Elektroden (20, 32) ausgelegt ist, aufweist, wobei die erste (36) und die zweite (38) Halterung nebeneinander in einer gleichen Ebene parallel zu einer Hauptwand (12, 14) angeordnet sind, wobei die zumindest zwei der Elektroden (20, 32), die von der ersten Halterung (36) getragen werden, von einer ersten Spannung (U1) versorgt werden, wobei die zumindest zwei Elektroden, die von der zweiten Halterung (38) getragen werden, von einer zweiten Spannung (U2) versorgt werden, wobei die zweite Spannung (U2) ein der ersten Spannung (U1) gegenteiliges Vorzeichen besitzt, wobei die Zirkulation der Flüssigkeit zwischen den Elektroden (20, 32) der ersten Halterung (36) und die Zirkulation der Flüssigkeit zwischen den Elektroden (20, 32) der zweiten Halterung entgegengesetzte Richtungen besitzen.

8. Wärmetransfereinrichtung (2, 26, 30, 42) nach einem der Ansprüche 1 bis 7, wobei die Wärmeleitung zwischen der ersten Hauptwand (12) und der zweiten Hauptwand (14) im ersten Zustand weniger als 40 W/K/m² und vorteilhaft weniger als 8 W/k/m² beträgt.

9. Wärmetransfereinrichtung (2, 26, 30, 42) nach einem der Ansprüche 1 bis 8, wobei die Wärmeleitfähigkeit zwischen der ersten Hauptwand (12) und der zweiten Hauptwand (14) im zweiten Zustand mehr als 250 W/K/m² und vorteilhaft mehr als 800 W/k/m² beträgt.

10. Raumfahrzeug (62), aufweisend:
- ein Gehäuse mit einer Nord-Fläche (78), einer Süd-Fläche (80), die der Nord-Fläche gegenüberliegt, eine Ost-Fläche (72) und eine West-Fläche (74), die der Ost-Fläche gegenüberliegt;
- mindestens einen Kühler (82, 84) der von mindestens einer Fläche unter der Nord-Fläche (78), der Süd-Fläche (80), der Ost-Fläche (72) oder der West-Fläche (74) getragen wird,
- mindestens ein dissipatives Gerät (86), das durch eine nominale Wärmetransfereinrichtung (2) mit zumindest einem Kühler (82, 84) verbunden ist,
**dadurch gekennzeichnet, dass** die nominale Wärmetransfereinrichtung (2) mindestens eine Wärmetransfereinrichtung (2, 26, 30 42) nach einem der Ansprüche 1 bis 9 aufweist, so dass eine schaltbare Wärmeleitung zwischen dem dissipativen Gerät (86) und dem Kühler (82, 84) gemäß dem Zustand der Wärmetransfereinrichtung (2, 26, 30, 42) ermöglicht wird.

11. Raumfahrzeug (62) nach Anspruch 10, welches mindestens eine redundante Wärmetransfereinrichtung (102), ein nominales Wärmeleitrohr (94) und ein redundantes Wärmeleitrohr (96) aufweist, und wobei eine Hauptwand (12, 14) der Haupttransfereinrichtung (2) und eine Hauptwand (12, 14) der redundanten Transfereinrichtung (102) in thermischem Kontakt mit dem nominalen Wärmeleitrohr (94) und dem redundanten Wärmeleitrohr (96) stehen.

## Claims

1. Heat transfer device (2, 26, 30, 42) of a spacecraft, capable of transferring heat between a first object (3) and a second object (4), comprising a housing (5) having a first main wall (12) and a second main wall (14), the first main wall (12) being intended to be in direct thermal contact by conduction with said first object (3), the second main wall (14) being intended to be in direct thermal contact by conduction with said second object (4), said housing (5) comprising a sealed internal cavity (6), a dielectric liquid (8) contained in the internal cavity (6), and a mixer (10) able to set said dielectric liquid in motion,
heat transfer device (2, 26, 30, 42) transfering heat by forced convection between the first main wall (12) and the second main wall (14), **characterized in that** the heat transfer device (2, 26, 30, 42) is able to be switched between a first state in which the dielectric liquid (8) is stagnant and a second state in which the dielectric liquid is in motion and **in that** the mixer (10) comprising at least two electrodes (20, 32) arranged with a spacing (i) between one another and immersed in the dielectric liquid, the electrodes (20, 32) and the liquid (8) forming an electrohydrodynamic system (18), when the heat transfer device (2, 26, 30, 42) is switched into the second state, the dielectric liquid passes across the electrodes during a forced convection movement; the thermal conductance between the first main wall and the second main wall when the transfer device is in the first state being four times less than the thermal conductance between the first main wall and the second main wall when the transfer device is in the second state.

2. Heat transfer device (2, 26, 30, 42) according to claim 1, which further comprises said first object (3) and wherein the first object is a heat pipe (28).

3. Heat transfer device (2, 26, 30, 42) according to any one of claims 1 and 2, which further comprises said second object (4) and wherein the second object is a heat pipe (28).

4. Heat transfer device (2, 26, 30, 42) according to any one of claims 1 to 3, wherein at least one wall among the first main wall (12) and the second main wall (14) has a flat outer face (17).

5. Heat transfer device (2, 26, 30, 42) according to any one of claims 1 to 4, wherein the housing has the shape of a parallelepiped having a length (L), a width (I), and a height (h), the height (h) being the distance between the first main wall (12) and the second main wall (14), and wherein the height (h) has a dimension two times smaller than said width (I).

6. Heat transfer device (2, 26, 30, 42) according to claim 1, wherein said electrodes (20, 32) extend in a plane parallel to the central plane of the main walls (12, 14).

7. Heat transfer device (2, 26, 30, 42) according to any one of claims 1 and 6, wherein the mixer (10) comprises a first holder (36) able to carry at least two electrodes (20, 32) and a second holder (38) able to carry at least two electrodes (20, 32), the first (36) and second (38) holders being arranged next to one another in a same plane parallel to a main wall (12, 14), the at least two electrodes (20, 32) carried by the first holder (36) being supplied a first voltage (U1), the at least two electrodes carried by the second holder (38) being supplied a second voltage (U2), said second voltage (U2) being of opposite sign to the first voltage (U1), the circulation of fluid between the electrodes (20, 32) of the first holder (36) and the circulation of fluid between the electrodes (20, 32) of the second holder (38) being in opposite directions.

8. Heat transfer device (2, 26, 30, 42) according to any one of claims 1 to 7, wherein the thermal conductance between the first main wall (12) and the second main wall (14) in the first state is less than 40 W/K/m² and advantageously less than 8 W/K/m².

9. Heat transfer device (2, 26, 30, 42) according to any one of claims 1 to 8, wherein the thermal conductivity between the first main wall (12) and the second main wall (14) in the second state is greater than 250 W/K/m² and advantageously greater than 800 W/K/m².

10. Spacecraft (62) comprising:
- a body having a North face (78), a South face (80) opposite to the North face, an East face (72), and a West face (74) opposite to the East face;
- at least one radiator (82, 84) carried by at least one face among the North face (78), the South face (80), the East face (72), or the West face (74),
- at least one dissipative equipment item (86) connected by a nominal heat transfer device (2) to at least one radiator (82, 84);
**characterized in that** the nominal heat transfer device (2) comprises at least one heat transfer device (2, 26, 30, 42) according to any one of claims 1 to 9, so as to enable switchable thermal conductance between the dissipative equipment item (86) and the radiator (82, 84), according to the state of the heat transfer device (2, 26, 30, 42).

11. Spacecraft (62) according to claim 10, which comprises at least one redundant heat transfer device (102), a nominal heat pipe (94), and a redundant heat pipe (96), and wherein a main wall (12, 14) of the main transfer device (2) and a main wall (12, 14) of the redundant transfer device (102) is in thermal contact with said nominal heat pipe (94) and said redundant heat pipe (96).
